# EUROPEAN PATENT SPECIFICATION

(11) **EP 0 979 745 B1**
(45) Date of publication and mention of the grant of the patent: **05.12.2001**
(21) Application number: 99115673.8
(22) Date of filing: 09.08.1999
(51) Int. Cl.: B60H 1/00, B60K 11/04, F04D 25/16, F01P 11/10

(54) **A fan unit for the heat-exchange assembly of a motor-vehicle**
Lüftereinheit einer Wärmeaustauscheranordnung für ein Kraftfahrzeug
Unité de ventilation pour échangeur de chaleur d'un véhicule automobile

(30) Priority: 11.08.1998 IT TO980703
(43) Date of publication of application: 16.02.2000
(73) Proprietor: FIAT AUTO S.p.A., 10135 Torino (IT)
(72) Inventor: Collinucci, Luigi, 10137 Torino (IT)
(74) Representative: Quinterno, Giuseppe

(56) References cited:
- EP-A- 0 259 182
- DE-A- 3 740 132
- DE-A- 4 307 793
- DE-A- 19 513 135
- DE-A- 19 545 390
- FR-A- 2 713 704

## Description

The present invention relates to a fan unit for the heat-exchange assembly of a motor vehicle, according to the preamble of claim 1, Document DE-A-19545390 discloses such a pan unit.

The invention relates more specifically to a fan unit comprising at least one rotor and drive means for the rotation thereof, said rotor including a set of blades arranged in a ring and extending radially from a tubular hub.

In conventional fan units, an electric motor is disposed coaxially inside the tubular hub of each rotor for the rotation thereof.

However, the presence of the electric motor in a coaxial position considerably limits the useful front surface area of the rotor, that is, the area through which the air-flow striking the fan unit can flow, and thus reduces the capacity to cool the heat-exchange assembly effectively.

In order to overcome this problem, the subject of the invention is a fan unit as defined in claim 1.

By virtue of this concept, the fan unit according to the invention increases the air-flow in comparison with that handled by known rotors, effectively solving the known problems of poor cooling efficiency which affect conventional fan units, particularly during operation in hot climates or with an over-heated engine, when the fan unit generally operates with a high frequency of operating cycles. The advantages of the invention are due specifically to the presence of the clear central region of each rotor which, when the vehicle is in motion, defines an additional opening through which the air can pass, increasing the flow of cooling air. When a rotor is rotated by the drive means, even with the vehicle stationary, a reduced pressure is created downstream of the rotor at its central zone which draws from the central opening thereof an air-flow additional to that taking place when the rotor is stationary so that the air-flow sent to the heat-exchange unit is further increased in comparison with that of conventional fan units. Moreover, by virtue of the fact that each rotor of the fan unit is no longer directly associated with the respective electric motor, the supporting structure of the rotors can be made considerably simpler and lighter in weight with respect to previously known solutions.

According to a preferred characteristic of the invention, the at least one rotor is arranged facing the front surface of the heat-exchange assembly so that the through-duct defined by its tubular hub constitutes a front ramming air intake for the heat-exchange assembly.

By virtue of the fact that the rotor or rotors are disposed adjacent the front surface of the radiator assembly, it is possible to provide a large clear region between the engine and the heat-exchange assembly and to avoid positioning, in the vicinity of these hot parts, auxiliary elements of the fan unit such as air ducts, the supporting structures of the electric motors, and cowlings for thermal protection against hot portions of the engine which were necessary in conventional solutions and which are now at least partially superfluous, achieving advantages with regard to the structural simplicity of the fan unit and to its thermal insulation from the heat radiated by the engine.

According to another preferred characteristic, the unit according to the invention comprises two rotors arranged side by side with their axes parallel and extending in a common, substantially horizontal plane.

By virtue of this characteristic, in contrast with conventional solutions in which two rotors are disposed side by side with their axes of rotation lying in a plane inclined to the horizontal in order to be able to use large-diameter rotors to achieve a satisfactory flow-rate, the two rotors can be arranged at the same level and housed in an opening defined in the front cross-member of the vehicle, further reducing the longitudinal dimensions of the assembly constituted by the fan unit and by the heat-exchange assembly coupled thereto, thus further increasing the size of the free space between the heat- exchange unit and the engine.

Further characteristics and advantages of the invention will become clearer from the following detailed description, given with reference to the appended drawings, provided purely by way of non-limiting example, in which:
Figure 1 is a front perspective view of a front cross member of a motor vehicle with which a heat-exchange assembly and a fan unit according to the invention are associated,

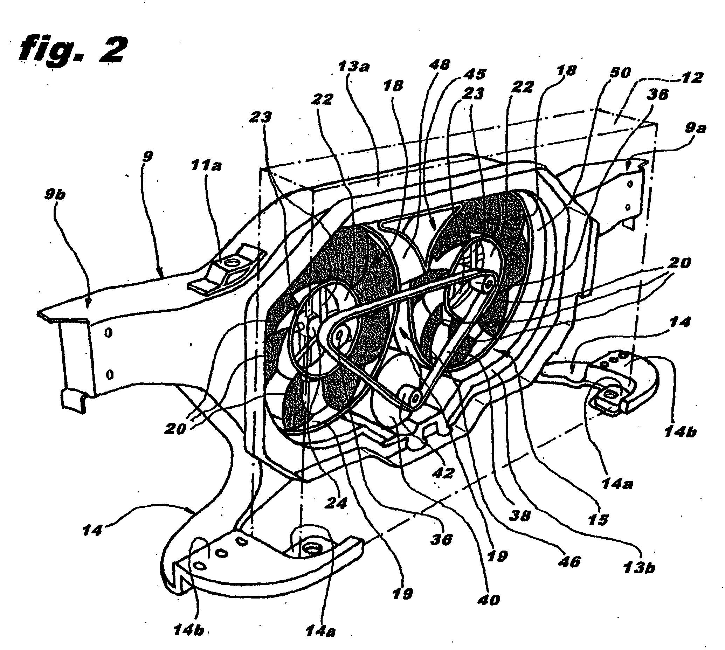

Figure 2 is a rear perspective view of the cross-member and of the fan unit of Figure 1, from which the heat-exchange assembly has been removed,
Figure 3 is a perspective view showing the front cross-member alone, from the front,

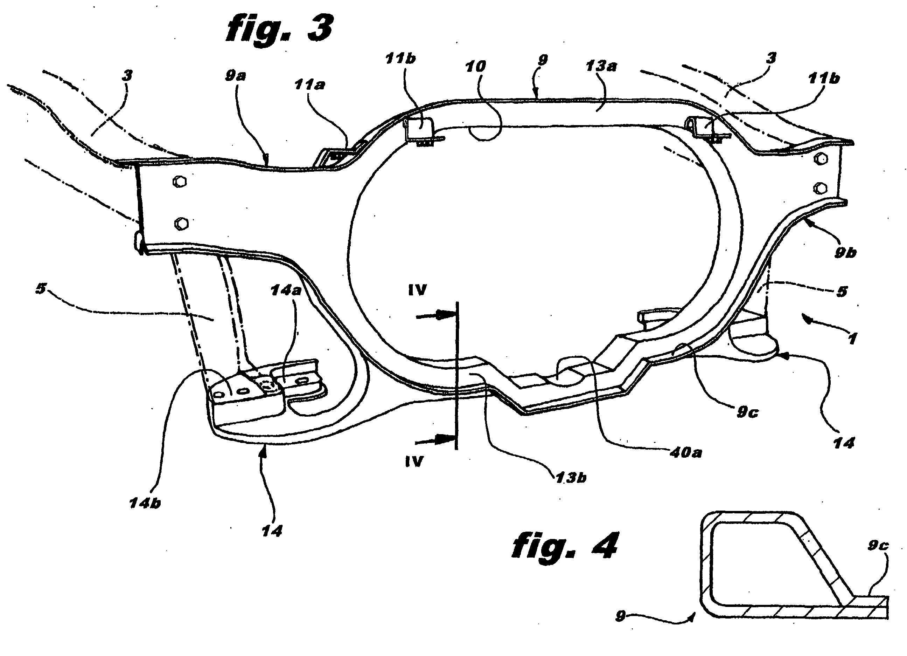

Figure 4 is an elevational view of a portion of the cross-member sectioned on the line IV-IV of Figure 3, and

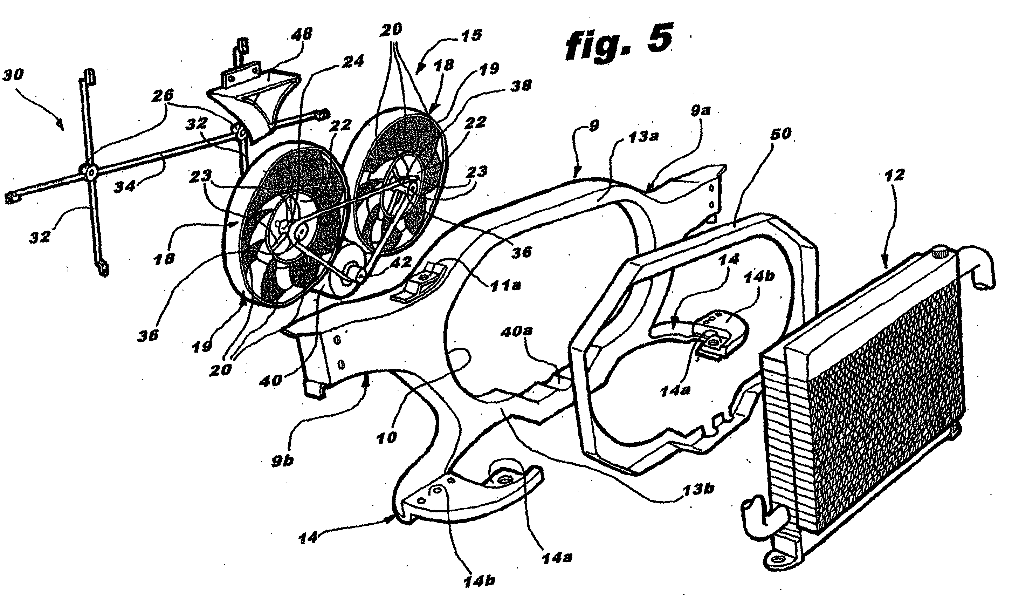

Figure 5 is an exploded perspective view of the fan unit with the respective cross-member and the heat-exchange assembly.

With reference to the drawings, the front portion of a motor-vehicle structure is generally indicated 1.

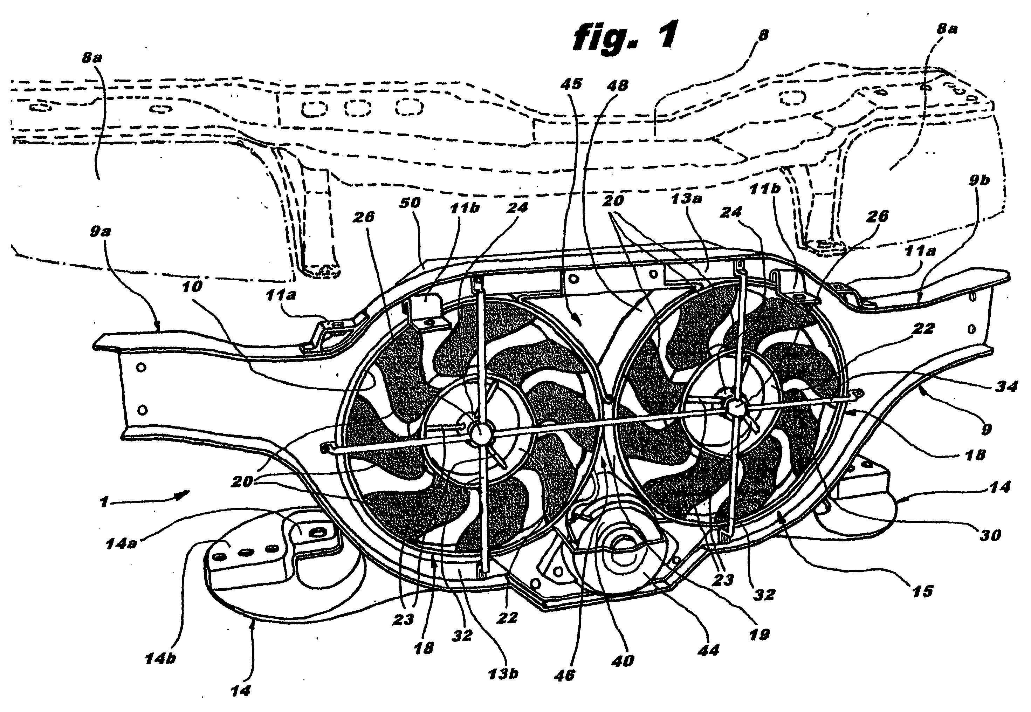

As shown in Figures 1 and 3, the portion 1 comprises a pair of side members 3 to the front ends of which respective vertical uprights 5 are welded. A front cross-member 9 of the vehicle frame is fixed to the free ends of the side members 3 and of the uprights 5, preferably by releasable anchoring means such as bolts.

The cross-member 9 has the function of closing the structure at the front and of constituting a support structure for auxiliary members of the vehicle such as an upper cross-member 8 which is intended to support the light units 8a and the horns (not shown in the drawings) and which can be fixed to upper mounts 11a, as well as a front bumper (not shown) which can be fixed to front mounts 11b. Also connected to the cross-member 9 are a fan unit 15, advantageously housed in an opening 10 defined by the cross-member 9, and a heat-exchange unit 12 which includes the radiator for cooling the engine and which may also include the condenser of the air-conditioning system and a radiator of the engine intercooler, arranged as an assembly or side by side. The assembly 12 may equally well be positioned behind the fan unit 15, as shown in the drawings, or in front of it.

The fan unit 15 preferably comprises a pair of rotors 18 arranged side by side with their axes of rotation parallel to one another and lying in a horizontal plane. Naturally, a fan unit 15 having a different number of rotors 18, for example, a single rotor, also falls within the scope of the invention.

Each rotor 18, which advantageously is of the type having an outer guard ring 19, comprises a set of blades 20 arranged in a ring and extending between the guard ring 19 and a cylindrical wall defining a tubular hub 22. A plurality of spokes 23, for example, three spokes extend from the hub 22 towards the centre of each rotor 18 as far as a respective shaft 24. The shafts 24 of both rotors 18 are supported for rotation by respective bushes 26, possibly incorporating rolling-contact bearings, and in turn connected to the front cross-member 9 by means of a support structure 30.

Keyed to each shaft 24, at the opposite end to the respective bush 26, is a driven pulley 36 for engagement by a transmission belt 38, for example, a belt of the poly-V type, that is, the type having a plurality of V-shaped. grooves, which also engages a driving pulley 42 keyed to the drive shaft of an electric motor 40. A power take-off connected to the engine of the vehicle may be used instead of the electric motor 40.

The two pulleys 36 may have different diameters so that each rotates the respective rotor 18 at a different speed. In this case, the profiles of the blades 20 of each of the rotors 18 may differ so as to be suitable for the respective design rate of rotation.

The electric motor 40 is advantageously disposed on an axis intermediate and transverse that joining the two centres of rotation of the rotors 18. This symmetrical arrangement achieves optimal angles of winding of the belt 38 on the pulleys 36 and 42, ensuring efficient transmission of the drive from the pulley 42 to the belt 38 and from the belt 38 to the pulleys 36.

Although the solution of the use of a single belt 38 simultaneously engaging the two pulleys.36 and the pulley 42 is preferred, it is possible alternatively to use two separate belts each of which is wound on a respective pulley 36 and on a portion of the pulley 42, or possibly one belt for each pulley 36 and an individually operable electric motor for each belt.

The opening 10 formed in the cross-member 9 is preferably cartouche-shaped, that is, approximately elliptical, so as to define a cavity of a shape complementary to that of the two rotors 18 side by side. The cross-member 9 thus also acts as a lateral fairing for the fan unit 15, enabling the additional fairing which is normally used for conventional fan units to be omitted.

In particular, the cross-member 9 is formed by an integral structure which comprises two symmetrically-opposed fork-shaped portions 9a, 9b each of which defines one half of the opening 10. The two parallel arms of each portion 9a, 9b form two generally parallel branches, that is, an upper branch 13a and a lower branch 13b.

A pair of curved flanges 14 extends outwardly and rearwardly from the cross-member 9 at the opposite ends of the lower branch 13b, each flange 14 having a seat 14a for supporting a base portion of the heat-exchange assembly 12 with the interposition of any known anchoring systems, and mounts 14b, for example, holes for the anchorage of the lower ends of the vertical uprights 5.

The flanges 14 advantageously replace an additional lower cross-member which has to be used to support the assembly 12 when a conventional straight cross-member is used.

When the rotors 18 of the fan unit are arranged in the opening 10 of the cross member 9, two substantially triangular spaces 45 and 46, respectively upper and lower, are defined between the rotors and the branches 13a and 13b. The space 46 adjacent the lower element 13b advantageously houses the electric motor 40 in a recessed seat 40a formed in an intermediate region of this branch. The space 45 adjacent the upper branch 13a is left free so as to constitute an additional ramming air intake for the fan unit 15.

An auxiliary fairing portion 48, advantageously disposed in the space 45, has one side parallel to the branch 13a and two arcuate sides each of which extends around a peripheral portion of a respective rotor 18. The fairing portion 48 is anchored to the central portion of the branch 13a and has the function of directly guiding the air-flow coming from the rotors 18 when the vehicle is in motion, preventing the air-flow from leaving the space 45 and directing it correctly towards the heat-exchange assembly 12.

A connecting fairing 50 is also interposed between the cross-member 9 and the heat-exchange assembly 12 acting as a device for peripheral sealing of the air flow directed towards the assembly 12 through the unit 15 so as to prevent leakages of air from the assembly 12.

The portion of the cross-member 9 which defines the opening 10 and which actually performs the function of a fairing for the fan unit 15 is advantageously formed by means of a metal box structure the cross-section of which defines a duct converging towards the assembly 12. This cross-section advantageously has a guide lip 9c facing the front portion of the cross-member 9.

The structure 30 for supporting the bushes 26, and hence for supporting the shafts 24 for rotation, is preferably formed by a pair of vertical rods 32 to each of which a respective bush 26 is fixed in an intermediate position, and a transverse rod 34 to which both of the bushes 26 are fixed. The ends of all of the rods 32, 34 are then anchored to the cross-member 9 by respective screws. In this case, a casing 44 is preferably fixed to the branch 13b in the region of the front portion of the motor 40 to protect the motor from accidental knocks.

Alternatively, the structure 30 may be formed by a pair of symmetrically inclined rods (not shown) both having their opposite ends fixed to the branches 13a and 13b and each supporting a respective bush 26 in an intermediate position. In this case, the rods are arranged so as to converge towards the branch 13b in the vicinity of the electric. motor 40 so that their portions adjacent the motor 40 constitute a portion for the protection thereof.

By virtue of the invention, which considerably improves the cooling of the heat-exchange assembly of the vehicle, it is also possible to provide a considerably larger free space between the heat-exchange assembly and the engine than is available in conventional solutions, avoiding the use of additional protection elements for thermally insulating the hot portions of the engine, which have the disadvantage of causing regions of thermal stagnation. This free space can advantageously be utilized for the fitting of a shaped guide body (not shown in the drawings since it is of generally known type) for defining a duct which extends between the rear portion of the assembly 12 and the ground so as to direct the air-flow which takes place through the heat-exchange assembly towards the ground with the dual purpose of rendering this air-flow more uniform and of accelerating it by virtue of the reduced pressure which is created in the portion of the vehicle adjacent the ground when the vehicle is in motion.

The invention also substantially simplifies the assembly operations of the various components of the vehicle associated with the front cross-member 9, which can advantageously be performed on an assembly line separately from the vehicle, as well as simplifying maintenance or repair operations. In particular, during the assembly of the vehicle, it is possible, first of all, to fix to the cross-member 9 the support structure 30 with the fan unit 15, provided with the respective rotors 20, the electric motor 40, and the transmission belt 38, and then the fairings 48 and 50, and then to mount the heat-exchange assembly 12. The upper cross-member 8 with the light units 8a and possibly accessory units is then coupled to the cross-member 9 and the entire integrated unit thus produced can be fixed, as an independent unit, on the front portion of the structure of a vehicle under construction, enabling operations to be performed easily on the members housed in the engine compartment before this unit is mounted.

## Claims

1. A fan unit for the heat-exchange assembly of a motor vehicle, comprising at least one rotor (18) and drive means (40) for the rotation thereof, said rotor (18) including a set of blades (20) arranged in a ring and extending radially from a tubular hub (22), wherein
the drive means (40) are arranged radially outside said rotor (18) and are connected thereto by transmission means (36, 38, 42), **characterized in that** the tubular hub (22) defines a substantially clear through-duct through which some of the cooling air of the heat-exchange assembly (12) can pass.

2. A fan unit according to Claim 1, **characterized in that** the at least one rotor (18) is arranged facing the front surface of the heat-exchange assembly (12) so that the through-duct defined by its tubular hub (22) constitutes a front ramming air intake for the heat-exchange assembly (12).

3. A fan unit according to Claim 1 or Claim 2, **characterized in that** it comprises two rotors (18) arranged side by side with their axes (24) parallel and extending in a common, substantially horizontal plane.

4. A fan unit according to Claim 3, **characterized in that** the drive means comprises a single electric motor (40) disposed substantially on an axis intermediate and transverse that joining the two centres of rotation of the rotors (18).

5. A fan unit according to Claim 4, **characterized in that** each rotor (18) has a shaft (24) on which is keyed a driven pulley (36) for engagement by a transmission belt (38) engaging a driving pulley (42) carried by the shaft of the electric motor (40).

6. A fan unit according to Claim 5, **characterized in that** the shaft (24) of each rotor (18) is connected to a respective cylindrical wall of the tubular hub (22) by means of a plurality of radial spokes (23).

7. A fan unit according to any one of Claims 1 to 6, **characterized in that** the shaft (24) of the at least one rotor (18) is supported for rotation by a support structure (30) which is intended to be anchored to a front cross-member (9) of the vehicle.

8. A fan unit according to Claim 7, **characterized in that** the cross-member (9) defines an opening (10) of a shape corresponding to that of the at least one rotor (18).

9. A fan unit according to Claim 8, **characterized in that** the front cross-member (9) defines a fairing for the at least one rotor (18).

10. A fan unit according to Claim 8 or Claim 9, **characterized in that** the front cross-member (9) comprises two symmetrically-opposed fork-shaped portions (9a, 9b) between which is defined a substantially cartouche-shaped opening (11) delimited at the top and at the bottom by two branches (13a, 13b) of the cross-member (9), two substantially triangular spaces (45, 46) being present between the two rotors (18) and the branches (13a, 13b), one of the spaces (46) being shaped so as to house the electric motor (40) for driving both of the rotors (18).

11. A fan unit according to Claim 10, **characterized in that** the electric motor (40) is fixed to one (13b) of the branches of the cross-member (9) in one of the spaces (46).

12. A fan unit according to Claim 11, **characterized in that** an element (44) for protecting the front portion of the electric motor (40) is connected to the front cross-member (9).

13. A fan unit according to Claim 11 or Claim 12, **characterized in that**, in the space (45) opposite that housing the electric motor (40), there is an auxiliary fairing portion (48) having one side parallel to a portion of the branch (13a) adjacent the front cross-member (9) and two arcuate sides each of which extends around a peripheral portion of a respective rotor (18), the fairing portion (48) defining an additional ramming air intake.

14. A fan unit according to any one of Claims 9 to 13, **characterized in that** it comprises a connecting fairing (50) interposed between the front cross-member (9) and the heat-exchange assembly (12).

15. A fan unit according to any one of Claims 7 to 14,
**characterized in that** the support structure (30) comprises a pair of vertical rods (32) to each of which a respective bush (26) is fixed for supporting the shaft (24) of a rotor (18) for rotation, and a transverse rod (34) to which both of the bushes (26) are fixed.

16. A fan unit according to any one of Claims 7 to 14, **characterized in that** the support structure (30) comprises a pair of inclined rods each carrying a respective bush (26) for supporting the shaft (24) of a rotor (18) for rotation, a portion of each rod adjacent the lower branch (13b) of the cross-member (9) being able to constitute a protection for the front portion of the electric motor (40).

17. A fan unit according to any one of Claims 9 to 16, **characterized in that** the front cross-member (9) is formed at least partially by a box structure which defines a substantially converging profile for the cooling air of the heat-exchange assembly (12).

18. A fan unit according to any one of Claims 1 to 17, **characterized in that** both of the rotors (18) have respective outer guard rings (19).

## Patentansprüche

1. Gebläseeinheit für die Wärmeaustausch-Baugruppe eines Kraftfahrzeugs, umfassend mindestens einen Rotor (18) und Antriebseinrichtungen (40) zur Rotation desselben, wobei der Rotor (18) einen Satz Blätter (20) einschließt, die in einem Ring angeordnet sind und sich strahlenförmig von einer röhrenförmigen Nabe (22) aus erstrecken, wobei die Antriebseinrichtungen (40) radial außerhalb des Rotors (18) angeordnet sind und mit diesem durch Übertragungseinrichtungen (36, 38, 42) verbunden sind, **dadurch gekennzeichnet, dass** die röhrenförmige Nabe (22) eine im Wesentlichen freie Durchleitung definiert, durch die ein Teil der Kühlluft der Wärmeaustausch-Baugruppe (12) durchtreten kann.

2. Gebläseeinheit nach Anspruch 1, **dadurch gekennzeichnet, dass** der mindestens eine Rotor (18) der Vorderfläche der Wärmeaustausch-Baugruppe (12) zugewandt angeordnet ist, so dass die durch seine röhrenförmige Nabe (22) definierte Durchleitung einen vorderen Staudrucklufteinlass für die Wärmeaustausch-Baugruppe (12) darstellt.

3. Gebläseeinheit nach Anspruch 1 oder Anspruch 2, **dadurch gekennzeichnet, dass** sie zwei Rotoren (18) umfasst, die Seite an Seite angeordnet sind, wobei ihre Achsen (24) parallel sind und sich in einer gemeinsamen, im Wesentlichen waagrechten Ebene erstrecken.

4. Gebläseeinheit nach Anspruch 3, **dadurch gekennzeichnet, dass** die Antriebseinrichtung einen einzelnen Elektromotor (40) umfasst, der im Wesentlichen an einer Achse angeordnet ist, die in der Mitte und quer zu jener Achse liegt, die die beiden Rotationszentren der Rotoren (18) verbindet.

5. Gebläseeinheit nach Anspruch 4, **dadurch gekennzeichnet, dass** jeder Rotor (18) eine Ankerwelle (24) aufweist, auf der eine angetriebene Laufrolle (36) aufgekeilt ist, und zwar zum Zusammenwirken mit einem Übertragungsriemen (38), der mit einer von der Welle des Elektromotors (40) getragenen Antriebslaufrolle (42) zusammenwirkt.

6. Gebläseeinheit nach Anspruch 5, **dadurch gekennzeichnet, dass** die Ankerwelle (24) jedes Rotors (18) über eine Mehrzahl radialer Speichen (23) mit einer jeweiligen zylindrischen Wand der röhrenförmigen Nabe (22) verbunden ist.

7. Gebläseeinheit nach einem der Ansprüche 1 bis 6, **dadurch gekennzeichnet, dass** die Ankerwelle (24) des mindestens einen Rotors (18) zur Rotation durch eine Stützstruktur (30) gestützt ist, die dazu bestimmt ist, mit einem vorderen Querträger (9) des Fahrzeugs verankert zu werden.

8. Gebläseeinheit nach Anspruch 7, **dadurch gekennzeichnet, dass** der Querträger (9) eine Öffnung (10) mit einer Form definiert, die der des mindestens einen Rotors (18) entspricht.

9. Gebläseeinheit nach Anspruch 8, **dadurch gekennzeichnet, dass** der vordere Querträger (9) eine Verkleidung für den mindestens einen Rotor (18) definiert.

10. Gebläseeinheit nach Anspruch 8 oder Anspruch 9, **dadurch gekennzeichnet, dass** der vordere Querträger (9) zwei einander symmetrisch gegenüberliegende gabelförmige Teile (9a, 9b) umfasst, zwischen denen eine im Wesentlichen kartuschenförmige Öffnung (11) definiert ist, die oben und unten durch zwei Arme (13a, 13b) des Querträgers (9) begrenzt ist, wobei zwei im Wesentlichen dreieckige Räume (45, 46) zwischen den zwei Rotoren (18) und den Armen (13a, 13b) vorhanden sind, wobei einer der Räume (46) zum Unterbringen des Elektromotors (40) zum Antreiben beider Rotoren (18) ausgebildet ist.

11. Gebläseeinheit nach Anspruch 10, **dadurch gekennzeichnet, dass** der Elektromotor (40) an einem (13b) der Arme des Querträgers (9) in einem der Räume (46) befestigt ist.

12. Gebläseeinheit nach Anspruch 11, **dadurch gekennzeichnet, dass** ein Element (44) zum Schutz des Vorderteils des Elektromotors (40) mit dem vorderen Querträger (9) verbunden ist.

13. Gebläseeinheit nach Anspruch 11 oder Anspruch 12, **dadurch gekennzeichnet, dass** im Raum (45) gegenüber dem, der den Elektromotor (40) aufnimmt, ein Zusatzverkleidungsteil (48) vorhanden ist, der eine Seite parallel zu einem Teil des Arms (13a) dem vorderen Querträger (9) benachbart und zwei gebogene Seiten aufiveist, von denen sich jede um einen peripheren Teil eines jeweiligen Rotors (18) erstreckt, wobei der Verkleidungsteil (48) einen zusätzlichen Staudrucklufteinlass definiert.

14. Gebläseeinheit nach einem der Ansprüche 9 bis 13, **dadurch gekennzeichnet, dass** sie eine Verbindungsverkleidung (50) umfasst, die zwischen dem vorderen Querträger (9) und der Wärmeaustausch-Baugruppe (12) angeordnet ist.

15. Gebläseeinheit nach einem der Ansprüche 7 bis 14, **dadurch gekennzeichnet, dass** die Stützstruktur (30) ein Paar lotrechter Stangen (32) umfasst, wobei an jeder davon eine jeweilige Buchse (26) befestigt ist, und zwar zum Stützen der Ankerwelle (24) eines Rotors (18) zur Rotation, sowie eine Querstange (34), an der beide Buchsen (26) befestigt sind.

16. Gebläseeinheit nach einem der Ansprüche 7 bis 14, **dadurch gekennzeichnet, dass** die Stützstruktur (30) ein Paar geneigter Stangen umfasst, von denen jede eine jeweilige Buchse (26) zum Stützen der Ankerwelle (24) eines Rotors (18) zur Rotation trägt, wobei ein Teil jeder Stange, benachbart dem unteren Arm (13b) des Querträgers (9), in der Lage ist, einen Schutz für den Vorderteil des Elektromotors (40) zu bilden.

17. Gebläseeinheit nach einem der Ansprüche 9 bis 16, **dadurch gekennzeichnet, dass** der vordere Querträger (9) zumindest zum Teil von einer Gehäusestruktur gebildet ist, die ein im Wesentlichen konvergierendes Profil für die Kühlluft der Wärmeaustausch-Baugruppe (12) definiert.

18. Gebläseeinheit nach einem der Ansprüche 1 bis 17, **dadurch gekennzeichnet, dass** beide Rotoren (18) jeweilige äußere Schutzringe (19) aufweisen.

## Revendications

1. Unité de ventilateur pour l'ensemble d'échange de chaleur d'un véhicule à moteur, comportant au moins un rotor (18) et des moyens d'entraînement (40) pour la rotation de celui-ci, ledit rotor (18) comprenant un ensemble de pales (20) disposé dans un anneau et s'étendant radialement depuis un moyeu tubulaire (22), dans laquelle
les moyens d'entraînement (40) sont disposés radialement à l'extérieur dudit rotor (18) et y sont reliés par des moyens de transmission (36, 38, 42), **caractérisée en ce que** le moyeu tubulaire (22) définit une conduite sensiblement dégagée à travers laquelle une partie de l'air de refroidissement de l'ensemble d'échange de chaleur (12) peut passer.

2. Unité de ventilateur selon la revendication 1, **caractérisée en ce que** le au moins un rotor (18) est disposé face à la surface avant de l'ensemble d'échange de chaleur (12) de telle sorte que le conduit défini par son moyeu tubulaire (22) constitue une prise d'air dynamique avant pour l'unité d'échange de chaleur (12).

3. Unité de ventilateur selon la revendication 1 ou la revendication 2, **caractérisée en ce qu'**elle comprend deux rotors (18) disposés côte à côte avec leurs arbres (24) parallèles et s'étendant dans un plan sensiblement horizontal commun.

4. Unité de ventilateur selon la revendication 3, **caractérisée en ce que** les moyens d'entraînement comportent un unique moteur électrique (40) disposé sensiblement sur un axe intermédiaire et transversal à celui reliant les deux centres de rotation des rotors (18).

5. Unité de ventilateur selon la revendication 4, **caractérisée en ce que** chaque rotor (18) a un arbre (24) sur lequel est clavetée une poulie entraînée (36) pour engagement par une courroie de transmission (38) qui engage une poulie d'entraînement (42) portée par l'arbre du moteur électrique (40).

6. Unité de ventilateur selon la revendication 5, **caractérisée en ce que** l'arbre (24) de chaque rotor (18) est relié à une paroi cylindrique respective du moyeu tubulaire (22) au moyen de plusieurs rayons radiaux (23).

7. Unité de ventilateur selon l'une quelconque des revendications 1 à 6, **caractérisé en ce que** l'arbre (24) du au moins un rotor (18) est supporté pour rotation par une structure de support (30) qui est prévue pour être ancrée sur un élément transversal avant (9) du véhicule.

8. Unité de ventilateur selon la revendication 7, **caractérisée en ce que** l'élément transversal (9) définit une ouverture (10) d'une forme correspondant à celle du au moins un rotor (18).

9. Unité de ventilateur selon la revendication 8, **caractérisée en ce que** l'élément transversal avant (9) définit un carénage pour le au moins un rotor (18).

10. Unité de ventilateur selon la revendication 8 ou la revendication 9, **caractérisé en ce que** l'élément transversal avant (9) comprend deux parties en forme de fourche opposées de manière symétrique (9a, 9b) entre lesquelles est définie une ouverture en forme de cartouche (11) délimitée en haut et en bas par deux branches (13a, 13b) de l'élément transversal (9), deux espaces sensiblement triangulaires (45, 46) étant présents entre les deux rotors (18) et les branches (13a, 13b), un des espaces (46) étant conformé de façon à loger le moteur électrique (40) pour l'entraînement des deux rotors (18).

11. Unité de ventilateur selon la revendication 10, **caractérisée en ce que** le moteur électrique (40) est fixé sur l'une (13b) des branches de l'élément transversal (9) dans l'un des espaces (46).

12. Unité de ventilateur selon la revendication 11, **caractérisé en ce qu'**un élément (44) destiné à protéger la partie avant du moteur électrique (40) est relié à l'élément transversal avant (9).

13. Unité de ventilateur selon la revendication 11 ou la revendication 12, **caractérisée en ce que**, dans l'espace (45) opposé à celui renfermant le moteur électrique (40) il y a une partie de capotage auxiliaire (48) ayant un côté parallèle à une partie de la branche (13a) adjacente à l'élément transversal avant (9) et deux côtés courbes qui s'étendent chacun autour d'une partie périphérique d'un rotor (18) respectif, la partie de capotage (48) définissant une prise d'air dynamique additionnelle.

14. Unité de ventilateur selon l'une quelconque des revendications 9 à 13, **caractérisée en ce qu'**elle comprend un carénage de raccordement (50) interposé entre l'élément transversal avant (9) et l'ensemble d'échange de chaleur (12).

15. Unité de ventilateur selon l'une quelconque des revendications 7 à 14, **caractérisée en ce que** la structure de support (30) comprend une paire de tiges verticales (32) sur chacune desquelles est fixé un manchon (26) destiné à supporter l'arbre (24) d'un rotor (18) pour rotation, et une tige transversale (34) sur laquelle sont fixés les deux manchons (26).

16. Unité de ventilateur selon l'une quelconque des revendications 7 à 14, **caractérisée en que** la structure de support (30) comprend une paire de tiges inclinées portant chacune un manchon (26) respectif destiné à supporter l'arbre (24) d'un rotor (18) pour rotation, une partie de chaque tige adjacente à la branche inférieure (13b) de l'élément transversal (9) étant capable de constituer une protection pour la partie avant du moteur électrique (40).

17. Unité de ventilateur selon l'une quelconque des revendications 9 à 16, **caractérisée en ce que** l'élément transversal avant (9) est formé au moins partiellement par une structure en boîte qui définit un profil sensiblement convergent pour l'air de refroidissement de l'ensemble d'échange de chaleur (12).

18. Unité de ventilateur selon l'une quelconque des revendications 1 à 17, **caractérisée en ce que** les deux rotors (18) ont des anneaux de protection extérieurs (19) respectifs.
